(19) Europäisches Patentamt

European Patent Office

Office européen des brevets

(11) Publication number: **0 226 855 B1**

(12) **EUROPEAN PATENT SPECIFICATION**

(45) Date of publication of patent specification: **12.10.94** (51) Int. Cl.⁵: **G01N 21/37**, G01N 21/35

(21) Application number: **86116379.8**

(22) Date of filing: **25.11.86**

(54) **Absorption analysis method.**

(30) Priority: **27.11.85 JP 267640/85**

(43) Date of publication of application:
**01.07.87 Bulletin  87/27**

(45) Publication of the grant of the patent:
**12.10.94 Bulletin  94/41**

(84) Designated Contracting States:
**DE FR GB IT SE**

(56) References cited:
**DE-A- 3 200 128
FR-A- 2 219 723
US-A- 3 005 097
US-A- 4 514 635**

(73) Proprietor: **HORIBA, LTD.
2 Miyanohigashi-machi
Kissyoin
Minami-ku Kyoto (JP)**

(72) Inventor: **Miyatake, Kimio 2-205, Takano
Jyutaku No. 2
1-7, Takano-Higashihiraki-cho
Sakyo-ku Kyoto (JP)**
Inventor: **Imaki, Takao
9-4, 1-chome, Baba
Nagaokakyo-City Kyoto (JP)**
Inventor: **Takeda, Kenji
100 Banchi
Kuze-Ohyabu-cho
Minami-ku Tokyo (JP)**

(74) Representative: **TER MEER - MÜLLER - STEIN-
MEISTER & PARTNER
Mauerkircherstrasse 45
D-81679 München (DE)**

Rank Xerox (UK) Business Services
(3.10/3.09/3.3.3)

## Description

The present invention relates to an absorption analysis method using infrared rays, ultraviolet rays and the like.

With an absorption analyzer, for example an infrared gas analyzer, the absorption of infrared rays incident upon the inside of a cell from a light source by a sample gas contained in the cell is measured to determine the concentration of an ingredient gas to be measured contained in the sample gas. This absorption analyzer is fundamentally based on the Lambert-Beer's law. That is to say, provided that the intensity of an incident ray is $I_o$, a cell-length being l, the absorptivity (the constant determined by a measuring-wave length and an object to be measured) being K, and the gas-concentration being C, the intensity of the transmitted ray I is expressed by the following equation:

$$I = I_o e^{-KCl}$$

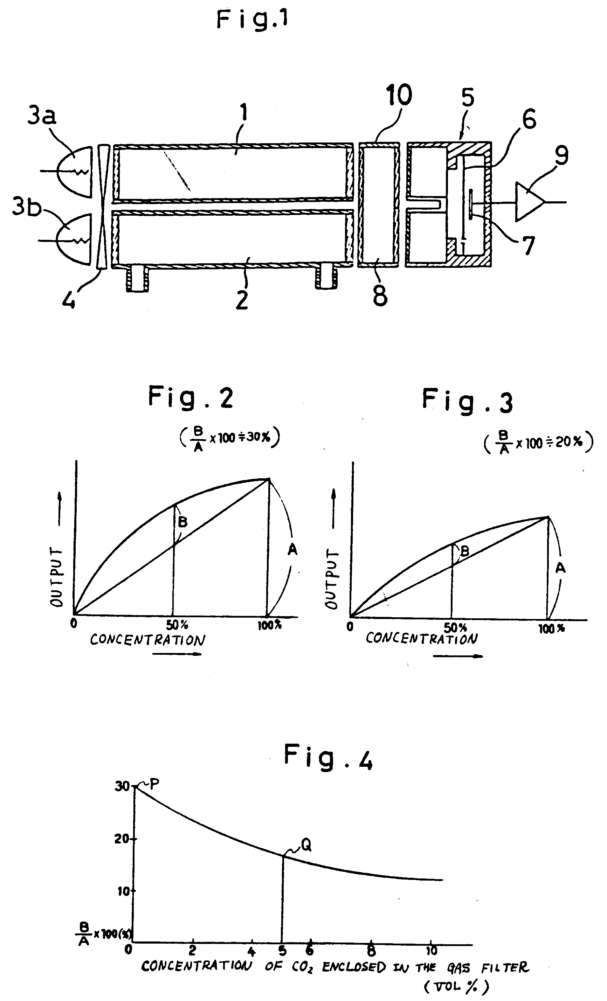

Accordingly, with an absorption analyzer, a relation between the concentration of an ingredient gas to be measured and an output shows a larger radius of curvature with an increase of the concentration of an ingredient gas to be measured, as shown in Fig. 2, so that, in order to improve the accuracy of measurement by the use of an almost linear portion of a curve shown in Fig. 2, a cell-length is reduced when the concentration of an ingredient gas to be measured is high while a cell-length is increased when the concentration of an ingredient gas to be measured is low.

A known absorption analyzer of this type, in which the cell-length is changed in correspondence to the concentration of an ingredient gas to be measured in a sample gar, is disclosed for example in Japanese Utility Model Publication No. 49-25349. In this known analyzer, a plurality of cells is arranged in series between a light source and a detector, and the cells to be used are changed according to the concentration of the ingredient gas to be measured in a sample gas.

However, since the cells are arranged in series, this prior art has the disadvantages that the constructional dimensions of the analyzer as a whole cannot be made as large as desirable and a troublesome operation is required in order to change the cell-length in correspondence to the concentration of the ingredient gas to be measured.

In addition, although the provision of an interference filter sideways of a light source is disclosed in the above mentioned Japanese Patent Publication, only the influence of an interference spectrum upon the measurement is eliminated by previously removing an interference spectrum band overlapping an absorption spectrum band of an ingredient gas to be measured, but other undesired effects are not overcome.

The document FR-A-2.219.723 describes a method for analyzing the content of an ingredient gas within a sample gas by using a filter gas within the light path from a light source means to a detector means. This filter gas is contained in the housing of the light source and it is a mixture of appropriate proportion between a monoatomic neutral gas and the gas to be analyzed. The proportion is determined as a function of the sensibility to be achieved and the response curve of the detector means. The response of the entire optical arrangement shall be linearized.

To improve the measurement accuracy in a method for analyzing the content of an ingredient gas within a sample gas, it is further known to use a fluid-modulation type analysis method comprising a pair of cells alternately supplied with a reference gas and a sample gas (see the US-patent US-A-4,514,635).

It is the object of the invention to provide an absorption analysis method capable of measuring the concentration of an ingredient gas having a wide range of possible concentrations by means of the same one cell without changing the cell length.

The method of the invention is defined by the teaching of claim 1 as enclosed. In this method, the concentration of an absorption gas in a gas filter is selected higher when the concentration of the ingredient gas to be measured is higher and is selected lower when the concentration of said ingredient gas is lower.

Further details of the invention and particular advantages thereof will be described in the following with reference to the accompanying drawings in which

Fig. 1     is a block diagram showing a preferred embodiment of the present invention;

Fig. 2     is a graph showing a relation between an output of a conventional absorption analyzer and a concentration of an ingredient gas to be measured in the sample gas;

Fig. 3     is a graph showing a relation between an output of an absorption analyzer using the method of the present invention and a concentration of an ingredient gas to be measured in the sample gas; and

Fig. 4     is a graph showing a relation between a concentration of $CO_2$ enclosed in a gas filter and a calibration curve.

The presently preferred embodiment of an absorption analyzer using the method of the invention is described with reference to an infrared gas analyzer as shown in Fig. 1.

Referring to Fig. 1, reference numeral 1 designates a reference cell filled with a gas, such as $N_2$, absorbing no infrared rays. A sample cell 2 is supplied with a sample gas. A light source 3a, 3b is arranged on one side of the reference cell 1 and the sample cell 2, respectively. Beams of light radiated from these light sources 3a, 3b are turned to intermittent beams by a rotating sector 4, the intermittent beams being passed through the reference cell 1 and the sample cell 2, respectively, to alternately enter a condenser microphone 5 arranged on the other side of the reference cell 1 and the sample cell 2 as a detector. 6 designates a condenser film and 7 designates a fixed pole.

A gas filter 8 is arranged between the reference cell 1 and the sample cell 2 and the condenser microphone 5. A gas having an absorption spectrum band nearly equivalent to that of an ingredient gas to be measured or an ingredient to be measured is enclosed in the gas filter 8. In the case where the ingredient to be measured is a stable gas such as CO or $CO_2$, the gas filter 8 is used per se enclosing the ingredient gas to be measured. On the other hand in the case where the ingredient to be measured is unstable, e. g. cyan gas, the gas filter 8 can be used with an acetylene gas loading having an absorption spectrum band nearly equivalent to that of the ingredient gas to be measured. Reference numeral 9 designates an amplifier.

With the above described construction, upon supplying the sample cell 2 with the sample gas, infrared rays emitted from the light source 3a are not absorbed in the reference cell 1 but pass through the gas filter 8 to be absorbed in correspondence to the concentration of the gas in the gas filter 8, whereby the condenser film 6 is dislocated. On the other hand, infrared rays emanating from the light source 3b are absorbed in the sample cell 2 in correspondence to the concentration of the ingredient gas to be measured contained in the sample gas and pass through the gas filter 8 to be absorbed again, and then the infrared rays enter the condenser microphone 5 to dislocate the condenser film 6. The concentration of the ingredient gas to be measured contained in the sample gas is measured from a difference in quantity of the dislocation of the condenser film 6.

A gas of higher concentration is enclosed in said gas filter 8 when the concentration of the ingredient gas to be measured in the sample gas is higher, while the gas of lower concentration is enclosed in the gas filter 8 when the concentration of the ingredient gas to be measured in the sample gas is lower.

For example, when the cell-length is 10 mm and the ingredient gas to be measured is $CO_2$, $CO_2$ gas having a concentration of 5 % by volume is enclosed in the gas filter 8 in the case of a full scale of 20 % by volume (for use in a higher-concentration measurement), $CO_2$ gas having a concentration of 3 % by volume in the case of a full scale of 15 % by volume (for use in a middle-concentration measurement), and $CO_2$ gas will not be enclosed in the gas filter 8 in the case of a full scale smaller than several % by volume (for use in a superlow-concentration measurement).

In addition, although the concentration of the ingredient gas to be measured in a sample gas is unknown, it can be previously estimated roughly depending upon the kind of the sample gas, such as air, a smoke from a plant and an exhaust gas from a motorcar, so that the concentration of the gas to be enclosed in the gas filter may be selected in correspondence to the estimated concentration.

The graph of Fig. 4 depicts the relation between the concentration of $CO_2$ (one example of an ingredient gas to be measured) enclosed in the gas filter 8 and calibration curves as shown in Figs. 2, 3. More concretely speaking, the ratio of B to A, that is to say B/A x 100 (%), as shown in Figs. 2, 3 is plotted on the ordinate axis while the concentration (Vol%) of $CO_2$ enclosed in the gas filter 8 is plotted on the abscissa axis. And, referring to Fig. 4, a point P shows a bending extention of the calibration curve at a 50 %-full scale point in Fig. 2 (B/A x 100 ≒ 30 %) while a point Q shows a bending extention of the calibration curve at a 50 %-full scale point in Fig. 3 (B/A x 100 ≒ 20 %).

As can be taken from Figs. 2, 3, the bending extention of the calibration curve is increased (the linearity is lowered) with an increase of the concentration of the ingredient gas to be measured in the sample gas. On the other hand, as can be concluded from Fig. 4, the bending extention of the calibration curve is reduced with an increase of the concentration of the gas enclosed in the gas filter 8 (but an output is reduced).

Accordingly, as above described, when the concentration of the ingredient gas to be measured in the sample gas is higher, the gas having also higher concentration is enclosed in the gas filter 8, while when the concentration of the ingredient gas to be measured in the sample gas is lower, said gas having also lower concentration is enclosed in the gas filter. In fact, it is desired that the said concentration of the gas to be enclosed in the gas filter 8 is set so that the bending extention (B/A x 100) of the calibration curve may be 20 % or less and the reduction of the output may be not increased.

In this way, the accuracy of measurement is improved by setting the concentration of the gas enclosed in the gas filter 8 in correspondence to the concentration of the ingredient gas to be measured contained in the sample gas.

Accordingly, also $CO_2$, of which the concentration in a sample gas can be comparatively large which so far had to be measured with a short cell, can now be measured with high accuracy without changing the cell-length by using an infrared ray analyzer for use in the determination of CO having lower concentrations, in which a cell is formed in a comparatively large length, and providing a gas filter in the optical path of the infrared ray analyzer.

Although a condenser microphone is used as a detector in the above described preferred embodiment, optional detectors, such as a solid state detector using a pyroelectric detector, a semiconductor detector, a thermopile and the like may be used. Also, the present invention may be applied to a "fluid-modulation type analyzer" in which a pair of cells are alternately supplied with a reference gas and a sample gas, or a single cell is alternately supplied with a reference gas and a sample gas. In addition, the gas filter 8 can be constructed as an integrated unit with the detector 5. Besides, the gas filter 8 may be arranged between the rotating sector 4 and the reference cell 1 and the sample cell 2. Furthermore, said ingredient gas to be measured and the like may be enclosed in a housing surrounding the light source to form the gas filter.

## Claims

1. A method for analyzing the content of an ingredient gas within a sample gas by absorption measurement, comprising the following steps:

    a) arranging a sample gas cell (1,2) and a separate gas filter (8) between a light source means (3a, 3b) and a detector means (5) for measuring the amount of light penetrating through said sample gas cell and said gas filter;

    b) supplying said sample gas cell with the sample gas to be measured; and

    c) using as said gas filter a gas filter which encloses an absorption gas and a dilution gas, whereby

    c1) the concentration of said absorption gas is selected higher when the concentration of the ingredient gas to be measured is higher, and is selected lower when the concentration of said ingredient gas is lower; and

    c2) the absorption gas is the ingredient gas to be analyzed or a gas having an absorption band nearly equivalent to that of the ingredient gas to be analyzed.

2. A method according to claim 1, wherein a per se known fluid-modulation type analysis method is used, comprising the use of a pair of cells (1, 2) alternately supplied with the sample gas and a reference gas, respectively, whereby said gas filter (8) is commonly used for both cells.

## Patentansprüche

1. Verfahren zum Analysieren des Gehalts eines Bestandteilgases in einem Probengas durch eine Absorptionsmessung, mit den folgenden Schritten:

    a) Anordnen einer Probengaszelle (1, 2) und eines getrennten Gasfilters (8) zwischen einer Lichtquelleneinrichtung (3a, 3b) und einer Detektoreinrichtung (5), um die Menge an Licht zu messen, die durch die Probengaszelle und das Gasfilter dringt;

    b) Versorgen der Probengaszelle mit dem zu messenden Probengas; und

    c) Verwenden eines solchen Gasfilters, das ein Absorptionsgas und ein Verdünnungsgas enthält, wobei

    c1) die Konzentration des Absorptionsgases höher gewählt wird, wenn die Konzentration des zu messenden Bestandteilgases höher ist, und sie niedriger gewählt wird, wenn die Konzentration dieses Bestandteilgases niedriger ist; und

    c2) das Absorptionsgas das zu analysierende Bestandteilgas oder ein Gas mit einem Absorptionsband ist, das nahezu demjenigen des zu analysierenden Bestandteilgases entspricht.

2. Verfahren nach Anspruch 1, bei dem ein für sich bekanntes Analyseverfahren vom Fluidmodulationstyp verwendet wird, mit der Verwendung eines Paars Zellen (1, 2), die abwechselnd mit dem Probengas bzw. einem Bezugsgas versorgt werden, wobei das Gasfilter (8) für beide Zellen gemeinsam verwendet wird.

## Revendications

1. Procédé d'analyse de la teneur en un ingrédient gazeux à l'intérieur d'un gaz échantillon par mesure d'absorption, comportant les étapes suivantes :

    a) disposer une cellule pour échantillon gazeux (1, 2) et un filtre de gaz distinct (8) entre un moyen formant source lumineuse (3a, 3b) et un moyen formant détecteur (5) pour mesurer la quantité de lumière pénétrant à travers ladite cellule pour échantillon gazeux et ledit filtre de gaz ;

    b) alimenter ladite cellule pour échantillon gazeux en gaz échantillon à mesurer ; et

    c) utiliser en tant que ledit filtre de gaz un filtre de gaz entourant un gaz d'absorption et un gaz de dilution, de telle sorte que

c1) la concentration dudit gaz d'absorption est choisie plus élevée lorsque la concentration de l'ingrédient gazeux à mesurer est plus élevée, et est choisie plus faible lorsque la concentration dudit ingrédient gazeux est plus faible ; et

c2) le gaz d'absorption est l'ingrédient gazeux à analyser ou un gaz ayant une bande d'absorption sensiblement équivalente à celle de l'ingrédient gazeux à analyser.

2. Procédé selon la revendication 1, dans lequel un procédé d'analyse du type à modulation de fluide connu en soi est utilisé, comportant l'utilisation d'un couple de cellules (1, 2) alternativement alimentées par l'échantillon gazeux et un gaz de référence, respectivement, de telle sorte que ledit filtre de gaz (8) soit utilisé en commun pour les deux cellules.

Fig.1

Fig.2

$\left(\frac{B}{A}\times 100 \doteqdot 30\%\right)$

Fig.3

$\left(\frac{B}{A}\times 100 \doteqdot 20\%\right)$

Fig.4

CONCENTRATION OF $CO_2$ ENCLOSED IN THE GAS FILTER
(VOL %)